(19) Europäisches Patentamt
European Patent Office
Office européen des brevets

(11) **EP 4 424 509 A1**

(12) **EUROPEAN PATENT APPLICATION**
published in accordance with Art. 153(4) EPC

(43) Date of publication:
**04.09.2024 Bulletin 2024/36**

(21) Application number: **22886443.5**

(22) Date of filing: **30.08.2022**

(51) International Patent Classification (IPC):
*B32B 27/18* (2006.01)          *A01G 9/14* (2006.01)
*A01G 13/02* (2006.01)         *B32B 27/36* (2006.01)
*C08K 5/3492* (2006.01)       *C08L 33/00* (2006.01)
*D03D 15/46* (2021.01)         *D03D 15/52* (2021.01)
*D04B 1/14* (2006.01)

(52) Cooperative Patent Classification (CPC):
**A01G 9/14; A01G 13/02; B32B 27/18; B32B 27/36;**
**C08K 5/3492; C08L 33/00; D03D 15/46;**
**D03D 15/52; D04B 1/14;** Y02A 40/25

(86) International application number:
**PCT/JP2022/032500**

(87) International publication number:
**WO 2023/074109 (04.05.2023 Gazette 2023/18)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **25.10.2021 JP 2021173746**

(71) Applicant: **Toyobo Co., Ltd.**
**Kita-ku**
**Osaka-shi, Osaka 530-0001 (JP)**

(72) Inventors:
• **SAGO,Tomoko**
**Otsu-shi, Shiga 520-0292 (JP)**
• **OKUMURA,Hisao**
**Tokyo 104-8345 (JP)**

(74) Representative: **Vossius & Partner**
**Patentanwälte Rechtsanwälte mbB**
**Siebertstrasse 3**
**81675 München (DE)**

(54) **LAMINATE FILM, FILM FOR PROTECTED HORTICULTURE, AND WOVEN/KNIT FABRIC**

(57)     An object of the present invention is to provide a laminated film, a film for protected horticulture, a woven or knitted fabric, and the like which are excellent in durability and can maintain high light transmittance without blocking the growth of plants. A laminated film comprising a heat-ray reflection layer and a surface functional layer on at least one surface of the heat-ray reflection layer, wherein the surface functional layer is formed of a resin composition containing particles and a resin, the particles have an average particle diameter of 4 $\mu$m to 10 $\mu$m, and the particles are contained in an amount of 0.3 parts by mass to 1.5 parts by mass with respect to 100 parts by mass of the resin.

**Description**

TECHNICAL FIELD

The present invention relates to a laminated film that is excellent in durability and can maintain high light transmittance without blocking the growth of plants, and a film for protected horticulture, a woven or knitted fabric, and the like obtained by using the laminated film.

BACKGROUND ART

A film having far-infrared ray reflection performance and visible region transmission performance has been proposed so far as a film for protected horticulture (see, for example, Patent Documents 1 and 2). However, the film is imparted with reflection performance by a metalcontaining layer, and has low visible region transmittance. In addition, application of an ultraviolet-cutting layer has also been proposed, but the ultraviolet-cutting layer does not have sufficient performance.

In addition, there has been proposed an ultra-multilayer film imparted with securement of visible region transmittance and ultraviolet cutting (see, for example, Patent Document 3). However, a film obtained by kneading an ultraviolet absorber into a film resin is used, and is still insufficient in durability, for example, when used as a film for an agricultural house.

A solar radiation control film having a heat ray reflection function in an ultra-multilayer film has been proposed (see, for example, Patent Document 4). In addition, as a film for an agricultural house, a film having a high total light transmittance and a high light diffusion function while having a heat ray reflection function has been proposed (see, for example, Patent Document 5). However, even these films cannot provide sufficient durability performance, for example, under a severe moist and hot environment in an agricultural house.

As described above, there is still no film which is excellent in visible light transmission performance and infrared ray reflection performance and sufficiently has performance required for an agricultural film or the like such as durability performance even under a severe moist and hot environment in an agricultural house.

PRIOR ART DOCUMENTS

PATENT DOCUMENTS

Patent Document 1: JP-B-5464567
Patent Document 2: JP-A-2012-206430
Patent Document 3: JP-B-6780636
Patent Document 4: JP-B-5513373
Patent Document 5: JP-A-2020-179643

SUMMARY OF THE INVENTION

PROBLEMS TO BE SOLVED BY THE INVENTION

In view of the above circumstances, an object of the present invention is to provide a laminated film, a film for protected horticulture, a woven or knitted fabric, and the like which are excellent in durability and can maintain high light transmittance without blocking the growth of plants.

MEANS FOR SOLVING THE PROBLEMS

The present inventors have found that the above problems can be solved by using a laminated film having a specific laminated structure of resin layers and the like, and thus have completed the present invention.

That is, the present invention provides the following laminated film.

[1] A laminated film containing a heat-ray reflection layer and a surface functional layer on at least one surface of the heat-ray reflection layer,
wherein the surface functional layer is formed of a resin composition containing particles and a resin, the particles have an average particle diameter of 4 μm to 10 μm, and the particles are contained in an amount of 0.3 parts by mass to 1.5 parts by mass with respect to 100 parts by mass of the resin.

[2] The laminated film according to [1], wherein the particles are organic particles.

[3] The laminated film according to [1] or [2], wherein the heat-ray reflection layer contains a multilayer laminated film in which 20 or more layers of at least two resin layers having different refractive indices are alternately laminated in the thickness direction.

[4] The laminated film according to any one of [1] to [3], wherein the resin composition contains an ultraviolet absorber having a triazine skeleton.

[5] The laminated film according to any one of [1] to [4], wherein the resin contained in the resin composition includes a resin as a binder component.

[6] The laminated film according to [5], wherein the resin as a binder component includes an acrylic resin.

[7] The laminated film according to any one of [1] to [6], wherein the laminated film has an average transmittance of 70% or more at a wavelength of 400 nm to 800 nm and an average transmittance of 20% or less at a wavelength of 900 nm to 1000 nm.

In addition, the present invention provides the following film for protected horticulture.

[8] A film for protected horticulture containing the laminated film according to any one of [1] to [7].

In addition, the present invention provides the following woven or knitted fabric.

[9] A woven or knitted fabric containing a thin belt-shaped tape cut from the laminated film according to any one of [1] to [7].

EFFECT OF THE INVENTION

The laminated film of the present invention having the above-described structure can be a film that is excellent in durability and adhesion and maintains high light transmittance without blocking the growth of plants.

In addition, the film for protected horticulture, the woven or knitted fabric, and the like of the present invention contain the laminated film, so that, for example, in an agricultural house or the like obtained by using the laminated film, it is possible to easily suppress a temperature rise in the house or the like, promote the growth of plants for a long period of time, and have high durability even under a severe outdoor moist and hot environment such as an agricultural house.

BRIEF DESCRIPTION OF THE DRAWINGS

Fig. 1 is a partial front view showing an embodiment of the laminated film of the present invention.
Fig. 2 is a partial front view showing another embodiment of the laminated film of the present invention.

MODE FOR CARRYING OUT THE INVENTION

Hereinafter, a detailed description is made of embodiments of the present invention, but the present invention is not limited to these embodiments.

In the present description, a numerical range represented by "to" means a range including numerical values described before and after "to" as a lower limit value and an upper limit value.

<Laminated film>

The laminated film of the present invention is:

a laminated film containing a heat-ray reflection layer and a surface functional layer on at least one surface of the heat-ray reflection layer,
in which the surface functional layer is composed of a resin composition containing particles and a resin, the particles have an average particle diameter of 4 μm to 10 um, and the particles are contained in an amount of 0.3 parts by mass to 1.5 parts by mass with respect to 100 parts by mass of the resin.

In the present invention, visible light refers to light having a wavelength of 400 to 800 nm, and heat rays refer to light having a wavelength of 800 to 1400 nm.

[Heat-ray reflection layer]

As the heat-ray reflection layer of the present invention, a layer having a known heat ray reflection function can be appropriately used. The heat-ray reflection layer can be formed of, for example, a multilayer laminated film in which at least two kinds of resin layers having different refractive indices are alternately laminated in the thickness direction.

The multilayer laminated film is, for example, a layer (hereinafter, also referred to as a "multilayer laminated structure") in which 20 or more first resin layers (hereinafter, also referred to as a "first layer") and second resin layers (hereinafter, also referred to as a "second layer") having different refractive indices are alternately laminated in the thickness direction onto the outermost layer.

The multilayer laminated structure is preferably laminated so as to be the outermost layer of the heat-ray reflection layer.

The thickness of the heat-ray reflection layer is adjusted depending on the application, and may be, for example, in the range of 20 μm to 150 μm, 22 μm to 100 μm, 25 μm to 80 μm, or 40 μm to 60 μm. When the thickness is thin, there is an advantage that the weight is light and workability is improved.

The multilayer laminated structure is not particularly limited as long as it satisfies the above structure and has a function of transmitting visible light in sunlight and selectively reflecting heat rays. Regarding the reflection by alternately laminated resin layers having different refractive indices, the reflection wavelength can be designed according to the optical thickness (refractive index × physical thickness) of the resin layer, and the reflectance can be designed according to the total number of resin layers and the difference in refractive index between the resin layers. In other words, the resin can be selected and the thickness and the number of laminated resin layers can be adjusted such that desired reflection characteristics are provided.

In order to appropriately perform transmission of visible light and selective reflection of heat rays by the multilayer laminated structure, the difference in average refractive index in the in-plane direction between the two types of resin layers is preferably at least 0.03. In addition, the multilayer laminated structure may include at least 15 or more resin layers having an optical thickness of 100 to 400 nm, preferably 150 to 360 nm, and may include, for example, 20 or more layers, 40 or more layers, 60 or more layers, 80 or more layers, 100 or more layers, 150 or more layers, or 200 or more layers. In addition, it is preferable that the number of resin layers be larger from the viewpoint of an optical function, but when the number is too large, the total thickness tends to be too large. Accordingly, the number of resin layers is preferably 2000 layers or less, more preferably 1000 layers or less.

As the resin for forming the resin layer having the multilayer laminated structure, those known per se can be employed, and examples thereof include polyester, polysulfone, polyamide, polyether, polyketone, polyacryl, polycarbonate, polyacetal, polystyrene, polyamideimide, polyarylate, polyolefin, polyfluoropolymer, polyurethane, polyarylsulfone, polyethersulfone, polyarylene sulfur, polyvinyl chloride, polyetherimide, tetrafluoroethylene, and polyetherketone. These are not limited to homopolymers but may be copolymerized. These may be used alone, or two or more thereof may be mixed for use. In addition, since it is easy to increase the difference in refractive index between resins, at least one of the resin layers is preferably a resin having as a repeating unit a condensed aromatic ring such as a naphthalene ring that is easy to increase the refractive index, which may be present as a copolymerization component.

Among them, as the resin (for example, as the first layer) for use in the resin layer having a high refractive index, because high molecular orientation is easily exhibited by stretching, a thermoplastic resin having crystallinity is preferable, and a thermoplastic resin having a melting point of 200°C or higher is particularly preferable. From such a viewpoint, the specific thermoplastic resin is preferably polyester, more preferably polyethylene naphthalate or polyethylene terephthalate.

A description is made of an example in which polyethylene naphthalate is used as the resin for use in the first layer.

As the polyethylene naphthalate, those known per se can be appropriately used. As the polyethylene naphthalate, for example, polyethylene-2,6-naphthalenedicarboxylate is preferable. In particular, polyethylene-2,6-naphthalenedicarboxylate having a condensed aromatic ring is preferable because the layer has a high refractive index and can be stretched at a high stretching ratio.

The proportion of the ethylene naphthalene dicarboxylate component which is a monomer component in the polyethylene naphthalate is preferably 95 mol% to 100 mol%, more preferably 96 mol% or more, still more preferably 97 mol% or more, based on the total repeating units composing the polyethylene naphthalate. When the ratio of the ethylene naphthalene dicarboxylate component as a main component is less than the lower limit, the melting point of the polyethylene naphthalate composing the first layer decreases, making it difficult to provide a difference in melting point from the polyethylene terephthalate composing the second layer described later. As a result, it may be difficult to impart a sufficient difference in refractive index to the biaxially stretched laminated polyester film.

Examples of copolymer components other than the main component composing the polyethylene naphthalate may include acid components such as aromatic carboxylic acids such as isophthalic acid, terephthalic acid, orthophthalic acid, naphthalenedicarboxylic acids other than the main naphthalenedicarboxylic acid, and biphenyldicarboxylic acid;

aliphatic dicarboxylic acids such as succinic acid, adipic acid, azelaic acid, sebacic acid, and decanedicarboxylic acid; and alicyclic dicarboxylic acids such as cyclohexanedicarboxylic acid, and glycol components such as aliphatic diols such as diethylene glycol, propylene glycol, 1,4-butanediol, 1,5-pentanediol, 1,6-hexanediol, and neopentyl glycol; alicyclic diols such as 1,4-cyclohexanedimethanol, polyethylene glycol, and polytetramethylene glycol, and the like.

Among the copolymer components, at least one selected from the group consisting of isophthalic acid, terephthalic acid, neopentyl glycol, 1,4-cyclohexanedimethanol, and diethylene glycol is preferable. Among these copolymer components, isophthalic acid and terephthalic acid are particularly preferable. These copolymer components may be used alone, or two or more thereof may be used.

The polyethylene naphthalate can be produced by appropriately applying a known method. For example, the polyethylene naphthalate can be produced by a method in which a diol component, a dicarboxylic acid component as main components, and optionally a copolymer component are subjected to an esterification reaction, and then the obtained reaction product is subjected to a polycondensation reaction to form a polyester. Alternatively, the polyethylene naphthalate may be produced by a method in which derivatives of these raw material monomers are subjected to a transesterification reaction, and then the obtained reaction product is subjected to a polycondensation reaction to form a polyester. Furthermore, a method may be employed in which two or more kinds of polyesters are melt-kneaded in an extruder and then subjected to a transesterification reaction (redistribution reaction).

The intrinsic viscosity of the polyethylene naphthalate composing the first layer is preferably 0.40 to 0.80 dl/g, and may be, for example, in the range of 0.45 to 0.75 dl/g. When the intrinsic viscosity of the polyethylene naphthalate composing the first layer is not within the above range, the difference from the intrinsic viscosity of the polyethylene terephthalate composing the second layer may become larger. As a result, in the case of an alternately laminated structure, the layer structure may be disturbed, or the film formability may be deteriorated although a film can be formed. Two or more kinds of polyesters may be melt-mixed in an extruder and then subjected to transesterification, as long as the intrinsic viscosity of each polyester is within the above range.

The glass transition temperature of the polyethylene naphthalate composing the first layer is preferably higher than the glass transition temperature of the polyethylene terephthalate composing the second layer.

On the other hand, the resin for use in the resin layer having a low refractive index (for example, the second layer) is not particularly limited as long as it can exhibit a sufficient refractive index difference from a resin layer having a higher refractive index, and can maintain necessary adhesion. For example, a resin obtained by copolymerizing a copolymer component capable of reducing the refractive index with the resin used for the resin layer having a high refractive index can also be used. In addition, since it is not necessary to increase the refractive index by stretching or the like, a resin having a melting point sufficiently lower than that of an amorphous resin or a resin of a resin layer having a high refractive index can also be used. For example, an amorphous polyester containing an ethylene terephthalate component or the like can be suitably used. Polylactic acid, an acrylic resin, polycarbonate, and polystyrene can also be used as a resin for use in the resin layer having a low refractive index.

A description is made of an example in which polyethylene terephthalate is used as the resin for use in the second layer.

When the polyethylene terephthalate is used, the transparency and reflectance at the initial stage of the film can be increased by selecting processing conditions during film formation, but the film may be crystallized due to heating during post-processing, leading to deterioration of transparency and reflectance characteristics. By using an amorphous polyester as the polyethylene terephthalate of the second layer, high transparency and reflectance at the initial stage of the film can be maintained even after heating during post-processing.

Examples of the ethylene terephthalate include polyesters containing an ethylene terephthalate component in an amount of 50 mol% to 80 mol% based on the total repeating units of the polyethylene terephthalate composing the second layer, more preferably copolymerized polyethylene terephthalate containing an ethylene terephthalate component in an amount of 55 mol% to 75 mol% (that is, the copolymerization component is preferably copolymerized in an amount of 20 to 50 mol%, more preferably 25 to 45 mol%). The copolymerization amount may be adjusted depending on the type of copolymerization component to be used within the range of the copolymerization amount, and for example, when the copolymerization component of copolymerized PET is isophthalic acid and naphthalenedicarboxylic acid, the copolymerization amount is about 30 mol% or more.

When the copolymerization amount is less than the lower limit, crystallization and orientation are likely to occur during film formation, so that a refractive index difference from the first layer is less likely to occur. As a result, the near-infrared reflecting ability is likely to decrease. In addition, the haze increases due to crystallization during film formation. On the other hand, when the copolymerization amount exceeds the upper limit, heat resistance and film formability during film formation (particularly during extrusion) are likely to be deteriorated, and when the copolymerization component is a component that imparts high refractive index, a refractive index difference from the first layer tends to be small due to an increase in refractive index. When the copolymerization amount is within the above range, a sufficient refractive index difference from the first layer can be secured while good heat resistance and film formability are maintained, and sufficient near infrared ray reflection performance can be imparted.

Examples of the copolymerization component preferably used for the polyethylene terephthalate composing the second layer may include acid components such as aromatic dicarboxylic acids such as isophthalic acid, 2,6-naphthalenedicarboxylic acid, and 2,7-naphthalenedicarboxylic acid, aliphatic dicarboxylic acids such as adipic acid, azelaic acid, sebacic acid, and decanedicarboxylic acid, and alicyclic dicarboxylic acids such as cyclohexanedicarboxylic acid, and glycol components such as aliphatic diols such as butanediol and hexanediol, alicyclic diols such as cyclohexanedimethanol, spiroglycol, and the like. Among them, isophthalic acid, 2,6-naphthalenedicarboxylic acid, cyclohexanedimethanol, and spiroglycol are preferable, and when a copolymerization component other than these is contained, the copolymerization amount thereof is preferably 10 mol% or less. In particular, the copolymerization component of the polyethylene terephthalate is preferably 1,4-cyclohexanedimethanol from the viewpoint of low refractive index and small decrease in molecular weight during extrusion.

The intrinsic viscosity of the polyethylene terephthalate is preferably 0.4 to 1.0 dl/g, and may be, for example, in the range of 0.45 to 0.95 dl/g or 0.5 to 0.95 dl/g. When the intrinsic viscosity of the polyethylene terephthalate composing the second layer is not within the above range, the difference from the intrinsic viscosity of the polyethylene naphthalate composing the first layer may become larger. As a result, in the case of an alternately laminated structure, the layer structure may be disturbed, or the film formability may be deteriorated although a film can be formed.

Two or more kinds of polyesters may be melt-mixed in an extruder and then subjected to transesterification, as long as the intrinsic viscosity of each polyester is within the above range.

The polyethylene terephthalate can be produced by appropriately applying a known method. For example, polyethylene terephthalate can be produced by a method in which an acid component, a glycol component, and a copolymerization component as main components are subjected to an esterification reaction, and then the obtained reaction product is subjected to a polycondensation reaction to form a polyester. Alternatively, the polyethylene naphthalate may be produced by a method in which derivatives of these raw material monomers are subjected to a transesterification reaction, and then the obtained reaction product is subjected to a polycondensation reaction to form a polyester. Furthermore, a method may be employed in which two or more kinds of polyesters are melt-kneaded in an extruder and then subjected to a transesterification reaction (redistribution reaction).

In addition, the first layer and the second layer may contain a small amount of additives as long as the object of the present invention is not impaired, and examples of the additives include additives such as lubricants such as inert particles, coloring agents such as pigments and dyes, stabilizers, flame retardants, and foaming agents.

The heat-ray reflection layer may include a protective layer on at least one outermost layer of the multilayer laminated structure. A preferred aspect is a heat-ray reflection layer including a protective layer on both outermost layers of the multilayer laminated structure.

The protective layer preferably contains the resin for use in the first layer.

The protective layer is preferably a layer mainly composed of polyethylene naphthalate. With regard to polyethylene naphthalate and the like, the description in the column of the first layer can be appropriately used in the same manner.

In the present invention, "mainly composed of polyethylene naphthalate" means that polyethylene naphthalate is contained in an amount of 50 mass% or more with respect to the total amount of the components in the protective layer, and for example, the amount may be 80 mass% or more or 90 mass% or more.

The thickness of the protective layer is 10 $\mu$m or less, but may be, for example, 1 $\mu$m to 9 um, 2 $\mu$m to 8 $\mu$m, 3 to 7 $\mu$m, or 4 to 5 $\mu$m.

When a plurality of protective layers are provided in the laminated film, for example, when the protective layers are provided on both outermost layers of the multilayer laminated structure, the thickness of protective layer refers to the thickness of each of them.

[Surface functional layer]

The surface functional layer of the present invention is a layer provided on at least one surface of the heat-ray reflection layer, and is made of a resin composition containing particles and a resin.

The particles may be inorganic particles, organic particles, or organic-inorganic composite particles. Specifically, for example, particles of silica, an acrylic resin, a styrene resin, an acrylic/styrene copolymer resin, silicone, a melamine resin, a benzoguanamine resin, or the like can be used. These may be used alone, or two or more thereof may be mixed for use.

The particles are preferably organic particles, specifically, organic particles in the examples described above, more preferably acrylic resin, styrene resin, or acrylic/styrene copolymer resin, particularly preferably acrylic resin particles from the viewpoint of heat resistance or solvent resistance.

The particles may have an average particle diameter of 4 $\mu$m to 10 $\mu$m, for example, 4.5 $\mu$m to 9.5 um, 5 $\mu$m to 9 $\mu$m, 5.5 $\mu$m to 8.5 um, 6 $\mu$m to 8 um, 6.5 $\mu$m to 7.5 $\mu$m, or 6.7 $\mu$m to 7 $\mu$m.

In the present invention, the average particle diameter of the particles is measured by the following method.

First of all, a cross section of the surface functional layer is cut out in parallel with the machine direction by a microtome method, and an extremely thin metal for imparting conductivity is sputtered on a particle surface of the cross section. From an image magnified 10,000 to 30,000 times with a transmission electron microscope (TEM), the circle area-equivalent diameter is obtained, and calculation is performed from the following mathematical formula.

Mathematical formula: Average particle diameter = sum of circle area-equivalent diameters of measured particles/number of measured particles (at least 100 or more)

The content of the particles in the surface functional layer is 0.3 parts by mass to 1.5 parts by mass with respect to 100 parts by mass of the resin contained in the surface functional layer, and may be, for example, 0.4 parts by mass to 1.4 parts by mass, 0.5 parts by mass to 1.3 parts by mass, 0.6 parts by mass to 1.2 parts by mass, 0.7 parts by mass to 1.1 parts by mass, 0.8 parts by mass to 1 part by mass, or 0.85 parts by mass to 9 parts by mass.

As the particles, spherical particles are preferably used. The spherical particles having a higher sphericity are more preferable, and those having an aspect ratio of 1.3 or less are preferable, and those having an aspect ratio of 1.1 or less are particularly preferable. The particles are preferably colorless and transparent particles. Here, the term "colorless and transparent" means that there is substantially no coloring that lowers the color purity of the three primary colors, and the light transmissivity is excellent.

The ratio of the thickness of the surface functional layer to the average particle diameter of the particles contained in the surface functional layer is 0.5 or more. When the thickness ratio is 0.5 or more, fall off of particles from the surface functional layer can be suppressed. The upper limit value of the thickness ratio is not particularly limited, but is preferably 3 or less, more preferably 2.5 or less, still more preferably 2 or less from the viewpoint of suppressing the material cost.

When the average particle diameter of the particles contained in the surface functional layer is larger than the thickness of the surface functional layer (that is, the above ratio is less than 1), the thickness of the surface functional layer is measured at a position where no particles are present.

The resin composition contains a resin as a binder component. Specific examples of the resin may include an acrylic resin, a polyester resin, a polyolefin resin, a urethane resin, and a fluororesin. These may be used alone, or two or more thereof may be mixed for use.

The resin is a main component (that is, the content is 50 mass% or more) in the resin composition, and is preferably contained in an amount of 70 mass% or more, and may be contained in an amount of 90 mass% or more, or 95 mass% or more with respect to the entire resin composition.

The resin may appropriately contain a known ultraviolet absorber, but preferably contains an ultraviolet absorber having a triazine skeleton.

As the ultraviolet absorber having a triazine skeleton, a known ultraviolet absorber may be appropriately used as long as the ultraviolet absorber has a triazine skeleton in the molecule.

Examples of the ultraviolet absorber having a triazine skeleton may include 2-(2-hydroxy-4-hexyloxyphenyl)-4,6-diphenyl-s-triazine, 2-(2-hydroxy-4-propoxy-5-methylphenyl)-4,6-bis(2,4-dimethylphenyl)-s-triazine, 2-(2-hydroxy-4-hexyloxyphenyl)-4,6-dibiphenyl-s-triazine, 2,4-diphenyl-6-(2-hydroxy-4-methoxyphenyl)-s-triazine, 2,4-diphenyl-6-(2-hydroxy-4-ethoxyphenyl)-s-triazine, 2,4-diphenyl-6-(2-hydroxy-4-propoxyphenyl)-s-triazine, 2,4-diphenyl-6-(2-hydroxy-4-butoxyphenyl)-s-triazine, 2,4-bis(2-hydroxy-4-octoxyphenyl)-6-(2,4-dimethylphenyl)-s-triazine, 2,4,6-tris(2-hydroxy-4-hexyloxy-3-methylphenyl)-s-triazine, 2,4,6-tris(2-hydroxy-4-octoxyphenyl)-s-triazine, 2-(4-isooctyloxycarbonylethoxyphenyl)-4,6-diphenyl-s-triazine, 2-(4,6-diphenyl-s-triazin-2-yl)-5-(2-(2-ethylhexanoyloxy)ethoxy)phenol, and the like. These may be used alone, or two or more thereof may be mixed for use.

The content of the ultraviolet absorber in the weather-resistant resin layer is preferably 8 to 45 parts by mass with respect to 100 parts by mass of the resin contained in the surface functional layer, and may be, for example, 10 to 40 parts by mass, 12 to 35 parts by mass, 13 to 30 parts by mass, 14 to 25 parts by mass, or 15 to 20 parts by mass.

The thickness of the surface functional layer is adjusted depending on the application, but is, for example, in the range of 1 $\mu$m to 125 $\mu$m, and may be, for example, 2 $\mu$m to 100 um, 3 $\mu$m to 90 um, 5 $\mu$m to 80 um, or 10 $\mu$m to 60 $\mu$m.

The surface functional layer may contain a small amount of additives as long as the object of the present invention is not impaired, and examples of the additives include additives such as lubricants such as inert particles other than the above-described particles, leveling agents for improving film formation quality, coloring agents such as pigments and dyes, stabilizers, flame retardants, and foaming agents.

[Laminated film]

The laminated film of the present invention is a laminated film containing the heat-ray reflection layer and the surface functional layer on at least one surface of the heat-ray reflection layer.

In the present invention, the spectral transmittance refers to a value obtained by measurement with a spectrophotometer. The spectral transmittance at a wavelength of 300 to 1,800 nm was measured at intervals of 2 nm to measure the spectral transmittance at each wavelength. Then, the average transmittance in each wavelength range (wavelength 400 to 800 nm and wavelength 900 to 1,000 nm) was calculated. The measurement is performed at 25°C under an air atmosphere, and the incident angle of the measuring light is set to 0 degree.

From the viewpoint of providing high total light transmittance (and light diffusibility) while exerting a heat ray reflection function, the laminated film of the present invention preferably has an average transmittance of 70% or more, more preferably 75% or more, or still more preferably 80% or more at a wavelength of 400 nm to 800 nm, and preferably has an average transmittance of 20% or less, more preferably 15% or less, still more preferably 10% or less, particularly preferably 5% or less at a wavelength of 900 nm to 1,000 nm.

For example, when the laminated film of the present invention is applied to a film for protected horticulture, visible light serving as a driving source for photosynthesis can be sufficiently supplied to plants. Furthermore, since the laminated film of the present invention has high total light transmittance, it is considered that the growth of plants can be sufficiently promoted.

In addition, since the average transmittance of heat rays is 20% or less, for example, when the laminated film of the present invention is applied to a film for protected horticulture, heat rays which would otherwise increase the temperature in an agricultural house can be sufficiently shielded. Furthermore, since heat generation as caused by a heat-ray absorbing film is small through the film itself, it is possible to suppress an increase in the temperature in the agricultural house and to reduce the cost required for dehumidifying and cooling.

In the present invention, the measurement of the film color b value was performed in accordance with JIS Z8722 using an automatic color-difference meter (model Z-300A manufactured by Nippon Denshoku Industries Co., Ltd.). The measurement of the color after the weather resistance test treatment was also performed in the same manner. As the film color b value, a difference Δb obtained by subtracting the untreated initial value data from the data after the weather resistance test treatment was used.

The film color b value is preferably 5 or less, and may be, for example, 4 or less, 3 or less, 2.5 or less, or 2 or less.

In the present invention, the coefficient of static friction is obtained by measurement performed by using the following method.

An acrylic plate fixed to the lower side of two films (each 20 cm in the machine direction × 10 cm in the transverse direction) in which the surface of the target laminated film and the opposite surface thereof are superimposed on each other is placed, and a thread is disposed at the center of the upper side of the two superimposed films for fixing to the acrylic plate.

Next, the acrylic plate is taken up by a low-speed roll (10 cm/min), and a detector is fixed to one end of the upper film (the end opposite to a direction in which the lower film is taken up) to detect a tensile force at the start between the films. As the thread used at that time, a thread having a weight of 200 g and a lower area of 50 cm² (rectangle of 10 cm in the machine direction × 5 cm in the transverse direction) is used.

Then, the coefficient of static friction (ps) is calculated from the following mathematical formula.

$$\mu s = (tensile\ force\ at\ start\ g)/(load\ 200\ g)$$

The coefficient of static friction is preferably 0.30 to 0.65, for example, more preferably 0.35 to 0.64, still more preferably 0.37 to 0.63.

(Other layers)

The laminated film may be appropriately provided with other known films or layers as long as the action and effect of the present invention are not hindered. Examples thereof may include a lubricity-imparting layer and a diffusing layer.

For example, in order to further enhance the lubricity of the laminated film, a lubricity-imparting layer having a function of imparting lubricity can be appropriately provided. In this case, the lubricity-imparting layer can be provided on at least one surface, preferably both surfaces of the laminated film.

The lubricity-imparting layer can be formed by applying a resin layer containing fine particles having an average particle diameter of 0.05 to 0.5 μm and a lubricant such as wax, or laminating the resin layer by co-extrusion to a multilayer laminated structure.

When the average particle diameter of the fine particles is less than 1.0 um, slipperiness of the film tends to be insufficient depending on the particle amount, whereas when the average particle diameter is more than 10 um, the particles will unfortunately fall off from the coating film.

Examples of the fine particles include organic fine particles such as polystyrene, polymethyl methacrylate, a methyl methacrylate copolymer, a methyl methacrylate copolymer crosslinked product, polytetrafluoroethylene, polyvinylidene fluoride, polyacrylonitrile, a benzoguanamine resin, and core shell type particles in which an outer shell of polystyrene particles is covered with an acrylic resin, and inorganic fine particles such as silica, alumina, titanium dioxide, kaolin, talc, graphite, calcium carbonate, feldspar, molybdenum disulfide, carbon black, and barium sulfate. Among them, organic fine particles are preferable.

[Application of laminated film]

The laminated film of the present invention can be suitably used, for example, in the field of protected horticulture, the field of construction materials such as window materials, and the field of transportation equipment such as automobiles, airplanes, and trains. In addition, for example, the present invention can also be suitably used for covers, curtains, lighting equipment, display devices, storage, packaging, and the like of outdoor facilities such as agricultural houses.

In the laminated film of the present invention, the laminated film can be used as it is, or the laminated film can be appropriately processed for use. Specific examples of using the film as it is may include a form in which a laminated film is attached to an object (for example, a window material such as glass). Specific examples of processing of the laminated film for use may include a form of using the laminated film as a woven or knitted fabric described below.

[Method for producing laminated film]

A detailed description is made of a method for producing a laminated film according to an embodiment of the present invention. Note that the manufacturing method described below is an example, and the present invention is not limited thereto. In addition, different aspects can also be obtained with reference to the following.

The laminated film of the present invention includes a heat-ray reflection layer and a surface functional layer provided on at least one surface of the heat-ray reflection layer.

First of all, a description is made of a method for producing the heat-ray reflection layer by taking as an example a case where the heat-ray reflection layer has a multilayer laminated structure in which at least two types of resin layers having different refractive indices are alternately laminated.

The multilayer laminated structure according to an embodiment of the present invention can be obtained by alternately superposing a polymer composing a first layer and a polymer composing a second layer in a molten state using a multilayer feed block device to create, for example, an alternately laminated structure of 99 or more layers in total, and providing on both sides thereof protective layers.

The multilayer laminated structure may be laminated such that the thickness of each layer of the first layer and the second layer has a desired inclined structure. This is obtained by, for example, changing the interval and length of the slits in the multilayer feed block device. This makes it possible to widely reflect light having a wavelength of 900 nm to 1000 nm.

After lamination to a desired number of laminations by the above-described method, the laminate is extruded from the die and then cooled on a casting drum to produce a multilayer unstretched film. The multilayer unstretched film is preferably stretched in at least one axial direction (the one axial direction is a direction along the film surface) of an axial direction of a film forming machine (sometimes referred to as a machine direction, a longitudinal direction or MD) or a direction orthogonal thereto in a film plane (sometimes referred to as a transverse direction, a transverse direction, or TD). From the viewpoint of improving the mechanical properties, it is more preferable to stretch the film biaxially in the machine direction and the transverse direction. The stretching temperature is preferably in the range of the glass transition temperature (Tg) to (Tg + 20) °C of the polymer of the first layer. By performing stretching at a temperature lower than the conventional temperature, the orientation characteristics of the film can be more highly controlled.

The stretch ratio is preferably 2.0 to 6.5 times, more preferably 3.0 to 5.5 times in both the machine direction and the transverse direction. It is preferable that the larger the stretch ratio be within the above range, because the smaller the variation in refractive index in the plane direction of the individual layers in the first layer and the second layer due to the thinning caused by stretching, the more uniform the light interference of the multilayer laminated structure in the plane direction, and also the larger the difference in refractive index between the first layer and the second layer in the stretching direction. As a stretching method, either uniaxial stretching only in the machine direction or the transverse direction, sequential biaxial stretching in which stretching in the machine direction and stretching in the transverse direction are separately performed, or simultaneous biaxial stretching in which stretching in the machine direction and stretching in the transverse direction are simultaneously performed can be applied. As each stretching method in the machine direction and the transverse direction, a known stretching method such as heating and stretching with a rod-like heater, roll heating and stretching, or tenter stretching can be used, but tenter stretching is preferable from the viewpoint of reduction of scratches due to contact with a roll, stretching speed, and the like.

In addition, by performing toe-in (relaxation) of the film in the stretching direction within a range of 1 to 15% while further performing heat fixation at a temperature of (Tg) to (Tg + 30) °C after stretching, the thermal stability (for example, heat shrinkage rate) of the obtained multilayer laminated structure can be highly controlled.

Next, a description is made of a method for forming the surface functional layer.

The surface functional layer, which is provided on at least one surface of the heat-ray reflection layer, may be provided directly on the heat-ray reflection layer or may be provided via another layer.

The formation of the surface functional layer is not particularly limited, but may be performed by, for example, a coating method, a spin coating method, or a transfer method. Among them, the weather-resistant layer is preferably formed by coating.

Specifically, a known coating technique such as a bar coating method, a roll coating method, a knife edge coating method, a gravure coating method, or a curtain coating method can be used as a method for coating and forming the surface functional layer on the surface of the heat-ray reflection layer. In addition, before the surface functional layer is applied, the heat-ray reflection layer may be subjected to a surface treatment (flame treatment, corona treatment, plasma treatment, ultraviolet treatment, and the like). The coating liquid used in coating is obtained by dispersing the above-described particles and resin, and may be an aqueous dispersion or a dispersion dispersed with an organic solvent.

When the surface functional layer is formed by coating, the coating to the heat-ray reflection layer (for example, the multilayer laminated structure) can be performed at any stage, but is preferably performed after the process of producing the multilayer laminated structure.

<Film for protected horticulture>

The film for protected horticulture of the present invention includes the laminated film.

The film for protected horticulture only needs to be a film that contains the laminated film. In other words, it may be composed only of the laminated film, or may be provided with another known film or layer.

<Woven or knitted fabric>

The woven or knitted fabric of the present invention includes a thin belt-shaped tape cut from the laminated film.

The woven or knitted fabric only needs to be a thin belt-shaped tape cut from the laminated film. In other words, it may be composed only of the thin belt-shaped tape, or may be provided with another known tape or layer.

The woven or knitted fabric is, for example, a flat or warp knitted fabric obtained by using the thin belt-shaped tape. As another example, the woven or knitted fabric is a warp knitted fabric obtained by using the thin belt-shaped tape as an inserting yarn.

In addition, the woven or knitted fabric is, for example, a woven fabric obtained by using the thin belt-shaped tape as a warp or a weft and using a filament yarn or the like as a weft or a warp.

The woven or knitted fabric can improve the mechanical strength such as winding property, blocking resistance, tear resistance, and durability of the laminated film, as compared with, for example, the case of using a single film of only the heat-ray reflection layer.

Furthermore, in the woven or knitted fabric, air permeability can be secured by openings formed between the thin belt-shaped tapes, the filament yarns, and the like. As described above, since the woven or knitted fabric is generally excellent in air permeability as compared with a case where the laminated film is used as it is alone, so that dew formation on the lower surface of the film, and therefore formation of water droplets which would otherwise hit plants can be prevented when the temperature difference between the cultivation section and the ceiling section increases at night, particularly in the morning. As a result, occurrence of discoloration or deterioration of fruits, leaves, flowers, and the like of plants can be prevented.

In the woven or knitted fabric, since openings are formed, it is possible to avoid excessively shielding ultraviolet light. Avoiding excessive shielding of ultraviolet light may be effective, for example, in improving coloring during growth of fruits such as eggplant and in supporting normal pollinating activities performed by bees in agricultural houses.

In addition, in the woven or knitted fabric, the thickness of the filament yarn or the like may be 0.01 to 0.30 times the width of the thin belt-shaped tape, and the interval between the adjacent thin belt-shaped tapes may be 0.1 to 0.5 times the width of the thin belt-shaped tape. In the present invention, the "filament yarn or the like" refers to a filament yarn or a spun yarn. As the filament yarn, either a monofilament yarn or a multifilament yarn may be used, but the filament yarn is not particularly limited.

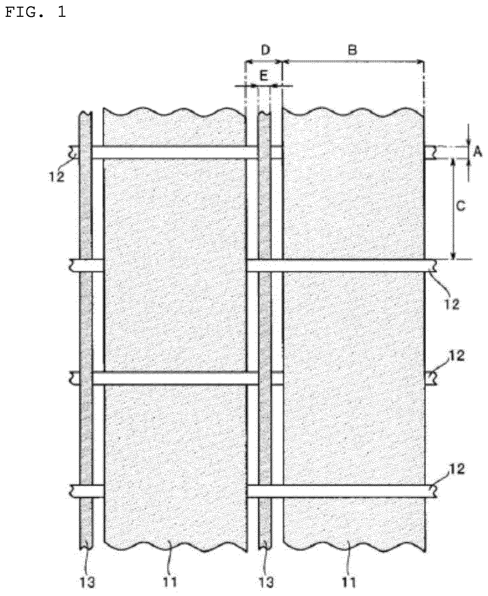

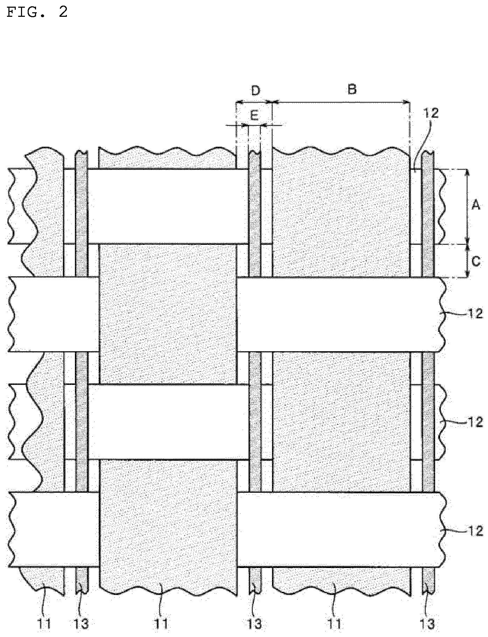

As shown in Figs. 1 and 2, a thin belt-shaped tape (warp) 11 obtained by cutting (slitting) a laminated film into a thin belt-shaped is woven with filament yarns or the like (weft yarns) 12, for example. By setting the thickness A of the filament yarn or the like (weft yarn) 12, the width B of the thin belt-shaped tape (warp yarn) 11, the interval C between the adjacent filament yarns or the like (weft yarns) 12, and the interval D between the adjacent thin belt-shaped tapes (warp yarns) 11 to be in specific ranges, the porosity of the woven or knitted fabric is set to be in an appropriate range, and the ultraviolet transmittance is set to be in an appropriate range while ensuring a high total light transmittance and a heat ray reflectance that are not inferior to those in a case where the laminated film is used alone. For firm weaving, filament yarns or the like (warp yarns) 13 having a thickness E are interposed as warp yarns between the adjacent thin belt-shaped tapes (warp yarns) 11.

More specifically, in the woven or knitted fabric, by setting the thickness of the filament yarn or the like (weft yarn) 12 to 0.01 to 0.30 times the width of the thin belt-shaped tape (warp yarn) 11, and setting the interval between the adjacent thin belt-shaped tapes (warp yarns) 11 to 0.1 to 0.5 times the width of the thin belt-shaped tape (warp yarn) 11, the porosity can be set within an appropriate range, and the ultraviolet transmittance can be set within an appropriate range while ensuring a high total light transmittance and heat ray reflectance that are not inferior to those in a case where the laminated film is used alone. An interval between adjacent filament yarns (weft yarns) 12 is preferably in a range of 1.0 to 10 mm.

The width of the thin belt-shaped tape (warp yarn) 11 is preferably 1 to 10 mm, more preferably 2 to 6 mm, still more preferably 3 to 5 mm. The interval between the thin belt-shaped tapes (warp yarns) 11, that is, the distance between the edge sides of the adjacent thin belt-shaped tapes (warp yarns) 11 is preferably 0.2 to 1.0 mm, more preferably 0.4 to 0.8 mm, still more preferably 0.5 to 0.7 mm. The thickness of the filament yarn or the like (weft yarn) 12 is preferably 0.05 to 0.35 mm, more preferably 0.1 to 0.3 mm, still more preferably 0.15 to 0.25 mm. In the woven or knitted fabric of the present invention, by setting the width of the thin belt-shaped tape of the woven or knitted fabric, the thickness of the filament yarn or the like, the interval between the adjacent filament yarns or the like, and the interval between the adjacent thin belt-shaped tapes as described above, the porosity can be set to an appropriate range, and the ultraviolet transmittance can be set to an appropriate range while ensuring a high total light transmittance and a heat ray reflectance that are not inferior to those in a case where the laminated film is used alone.

The porosity of the woven or knitted fabric formed from the laminated film is preferably 10 to 30%. The "porosity " in the present invention is determined by the following formula: [S $(cm^2)/100$ $(cm^2)] \times 100$, in which when a square portion of 10 cm in length and width (area: 100 $cm^2$) on one surface of the woven or knitted fabric is observed from the direction perpendicular to the surface, a portion through which the back surface side is visible with no blockage is defined as a hole, and the sum ($Scm^2$) of the areas of the holes (referred to as hole areas) is determined.

In the woven or knitted fabric of the present invention, when the porosity is 10% or more, the air permeability of the woven or knitted fabric can be improved. When a skylight provided on the ceiling is opened at night when photosynthesis is not performed to lower the temperature in an agricultural house in preparation for temperature rise in the daytime of the next day, the air heated in the daytime in the lower part of the agricultural house can be released to the outside through the woven or knitted fabric. In addition, even when the air in the upper part close to the roof is cooled at night, particularly in the morning, the woven or knitted fabric of the present invention is preferable because dew formation on the lower surface of the woven or knitted fabric, and therefore formation of water droplets which would otherwise hit plants to cause deterioration in quality such as discoloration and deterioration of fruits, leaves, flowers, and the like of the plants, and which would otherwise cause deterioration in the woven or knitted fabric itself can be prevented. When the porosity is 30% or less, the woven or knitted fabric of the present invention is preferable because a high total light transmittance and a high heat ray reflectance provided by the laminated film can be secured.

EXAMPLES

Hereinafter, a specific description is made of the present invention with reference to Examples, but the present invention is not limited to the following Examples. Physical properties and characteristics in Examples were measured or evaluated by the following methods. The word "part" refers to "part by mass".

In addition, each measurement, evaluation, and the like in Examples were performed as follows.

(1) Total thickness of film and thickness of each layer

For the total thickness of film, a film sample was nipped in a spindle detector (K107C manufactured by Anritsu Corporation), and the thickness was measured at 10 points at different positions with a digital differential electron micrometer (K351 manufactured by Adachi Electric Co., Ltd.) to calculate an average value as the total thickness of film.

For the thickness of each layer of the film, the laminated film was cut out into a size of 2 mm in the film machine direction and 2 cm in the transverse direction, fixed in an embedding capsule, and then embedded in an epoxy resin (EPOMOUNT manufactured by Refine Tech Ltd.). The embedded sample was cut vertically in the transverse direction with a microtome (ULTRACUT UCT manufactured by LEICA) to provide a thin film section having a thickness of 5 nm. The section was observed and photographed at an acceleration voltage of 100 kV using a transmission electron microscope (Hitachi, Ltd., S-4300), and the thickness (physical thickness) of each layer was measured from the photograph.

For a layer having a thickness of more than 1 $\mu$m, a layer present inside the multilayer structure was defined as an intermediate layer, and a layer present on the outermost layer was defined as an outermost layer, and the thickness of each layer was measured.

Note that whether the layer is the first layer or the second layer can be determined by the aspect of the refractive index, but when it is difficult to do so, it can be determined based on an electronic state by analysis using NMR or analysis using TEM. The refractive index of each layer can also be determined from a single layer film having the same composition as that of each layer but having a larger thickness.

(2) Spectral transmittance

The spectral transmittance at a wavelength of 300 to 1,800 nm was measured using a spectrophotometer (UV3600 manufactured by Shimadzu Corporation) at intervals of 2 nm. A spectral spectrum of the obtained laminated film was obtained, and the spectral transmittance at each wavelength was measured. Then, the average transmittance in each wavelength range (wavelength 400 to 800 nm and wavelength 900 to 1,000 nm) was calculated.
The measurement was performed at 25°C under an air atmosphere, and the incident angle of the measuring light was set to 0 degree.

(3) Total light transmittance

The measurement of the total light transmittance (TT) was performed in accordance with JIS K7361-1 using a haze meter (NDH-4000, manufactured by Nippon Denshoku Industries Co., Ltd.).
The measurement of the total light transmittance after the weather resistance test treatment was also performed in the same manner.

(4) Average particle diameter

The average particle diameter of the particles (also referred to as a "filler") contained in the surface functional layer was obtained by measurement performed by using the following method.
First of all, a cross section of the surface functional layer was cut out in parallel with the machine direction by a microtome method, and an extremely thin metal for imparting conductivity was sputtered on a particle surface of the cross section. From an image magnified 10,000 to 30,000 times with a transmission electron microscope (TEM), the circle area-equivalent diameter was obtained, and calculation was performed from the following mathematical formula. The results are shown in Table 1.
Mathematical formula: Average particle diameter = sum of circle area-equivalent diameters of measured particles/number of measured particles (at least 100 or more)

(5) Evaluation of film color b value

The measurement of the film color b value was performed in accordance with JIS Z8722 using an automatic color-difference meter (model Z-300A manufactured by Nippon Denshoku Industries Co., Ltd.). The measurement of the color after the weather resistance test treatment was also performed in the same manner. The film color b value is shown in Table 1 as a difference $\Delta b$ obtained by subtracting the untreated initial value data from the data after the weather resistance test treatment.

(6) Moisture-heat resistance treatment

A sample piece obtained by cutting a film into a 50 mm square was left for 120 hours in an environmental tester set at 80°C and 80%. Thereafter, the sample piece was taken out and subjected to appearance evaluation and evaluation of adhesion, and the results are shown in Table 1. In addition, a test performed by using the sample after the moisture-heat resistance treatment was taken as each measurement after the weather resistance test.

(7) Evaluation of adhesion after moisture-heat resistance treatment

Evaluation of adhesion after the moisture-heat resistance treatment was performed as follows. Crosscutting of squares (100 squares of 1 mm$^2$) was performed, and a cellophane tape (manufactured by Nichiban Co., Ltd.) having a width of 24 mm was attached on the cross-cut portion and rapidly peeled off at a peeling angle of 90°, and then the peeled surface was observed and evaluated in accordance with the following criteria.

<Criteria for evaluation of adhesion>

⊙: Peeled area is 0% or more and less than 5% (adhesion is extremely good)
○: Peeled area is 5% or more and less than 50% (adhesion is good)
✕: Peeled area is more than 50% (adhesion is poor)

(8) Coefficient of static friction of laminated film

An acrylic plate fixed to the lower side of two films (each 20 cm in the machine direction × 10 cm in the transverse direction) in which the surface of the laminated film and the opposite surface thereof were superimposed on each other was placed, and a thread was disposed at the center of the upper side of the two superimposed films for fixing to the acrylic plate.

Next, the acrylic plate was taken up by a low-speed roll (10 cm/min), and a detector was fixed to one end of the upper film (the end opposite to a direction in which the lower film was taken up) to detect a tensile force at the start between the films. As the thread used at that time, a thread having a weight of 200 g and a lower area of 50 cm$^2$ (rectangle of 10 cm in the machine direction × 5 cm in the transverse direction) was used.

The coefficient of static friction ($\mu$s) was calculated from the following mathematical formula.

$$\mu s = (\text{tensile force at start g})/(\text{load 200 g})$$

As the coefficient of static friction of the film increases, the slidability decreases, and when the film is wound into a roll or handled, wrinkles and defects easily occur.

[Preparation of heat-ray reflection layer A]

Polyethylene-2,6-naphthalate (hereinafter, referred to as "PEN") having an intrinsic viscosity (ortho-chlorophenol, 35°C) of 0.62 dl/g was prepared as a polyester for the first layer and the protective layer, and cyclohexanedimethanol copolymerized polyethylene terephthalate (hereinafter, referred to as "PETG") having an intrinsic viscosity (ortho-chlorophenol, 35°C) of 0.77 dl/g obtained by copolymerizing 30 mol% of cyclohexanedimethanol was prepared as a polyester for the second layer.

The polyester for the first layer and for the protective layer was dried at 180°C for 5 hours and then supplied to an extruder, and the PEN of the first layer was brought into a molten state at 290°C. The PETG of the second layer was dried at 120°C for 10 hours, then supplied to an extruder, and heated to 230°C to be brought into a molten state.

Thereafter, after the PEN of the first layer was branched into 137 layers and the PETG of the second layer was branched into 138 layers, the PEN layer of the first layer and the PETG layer of the second layer were alternately laminated, and a protective layer was laminated on both surfaces of a laminated structure portion in which the ratio of the maximum layer thickness to the minimum layer thickness in each of the first layer and the second layer continuously changed to 1.4 times at the maximum/minimum using a multilayer feed block device, and the resultant was guided to a die while maintaining the laminated state, and cast on a casting drum. Then, an unstretched multilayer laminated film having the protective layer composed of the PEN layer on the outermost layers of both surfaces of the film and having 275 layers in total in the laminated structure portion was created. The amount of the protective layer supplied was adjusted such that the thickness after stretching was as shown in Table 1. In addition, the discharge amounts of the resins of the first layer and the second layer were adjusted such that the optical thickness ratios of the first layer and the second layer of the laminated structure portion excluding the protective layer were equal.

The unstretched film obtained as described above was preheated at 120°C, and further heated from above with an IR heater at 900°C between rolls at a low speed and a high speed by 15 mm to stretch the film 3.5 times in the machine direction. Subsequently, the film was supplied to a tenter and stretched 4.5 times in the transverse direction at 140°C. The obtained biaxially oriented film was heat-fixed at a temperature of 190°C for 30 seconds, and then subjected to 1.5% toe-in (relaxation) in the transverse direction. A roll having a thickness of the heat-ray reflection layer of 55 $\mu$m, a total thickness of the protective layers on both sides of 13 um, and a width of 2000 mm was obtained.

[Preparation of coating liquid A and formation of weather-resistant resin layer]

A special acrylic resin ("UV-G13" manufactured by Nippon Shokubai Co., Ltd.), a triazine-based ultraviolet absorber ("ADK STAB (registered trademark) LA-F70" manufactured by ADEKA Corporation, molecular weight: 700), polymer particles having an average particle diameter of 5.2 $\mu$m ("TECHPOLYMER (registered trademark) MBX-5" manufactured by Sekisui Kasei Co., Ltd.), and a solvent (toluene) were mixed at a mass ratio shown in Table 1 to prepare a coating liquid. Using a bar coater, the obtained coating liquid was applied onto the surface of the heat-ray reflection layer polyester film and then dried to form a coated layer having a predetermined thickness shown in Table 1.

[Preparation of coating liquid B]

A coating liquid B was obtained in the same manner as in coating liquid A except that polymer particles having an average particle diameter of 7.3 $\mu$m ("TECHPOLYMER (registered trademark) MBX-8" manufactured by Sekisui Kasei Co., Ltd.) were used instead of the polymer particles having an average particle diameter of 5.2 $\mu$m. Using a bar coater, the obtained coating liquid was applied onto the surface of the heat-ray reflection layer polyester film and then dried to form a coated layer having a predetermined thickness shown in Table 1.

[Preparation of coating liquid C]

A coating liquid C was obtained in the same manner as in coating liquid A except that polymer particles having an average particle diameter of 4.0 $\mu$m ("EPOSTAR (registered trademark) MV1004" manufactured by Nippon Shokubai Co., Ltd.) were used instead of the polymer particles having an average particle diameter of 5.2 um. Using a bar coater, the obtained coating liquid was applied onto the surface of the heat-ray reflection layer polyester film and then dried to form a coated layer having a predetermined thickness shown in Table 1.

[Preparation of coating liquid D]

A coating liquid D was obtained in the same manner as in the case of the coating liquid A except that the polymer particles having an average particle diameter of 5.2 $\mu$m and the ultraviolet absorber contained in the coating liquid A were not added. Using a bar coater, the obtained coating liquid was applied onto the surface of the heat-ray reflection layer polyester film and then dried to form a weather-resistant layer having a predetermined thickness shown in Table 1.

[Preparation of coating liquid E]

A coating liquid E was obtained in the same manner as in the coating liquid A except that polymer particles having an average particle diameter of 12.1 $\mu$m ("TECHPOLYMER (registered trademark) MBX-12" manufactured by Sekisui Kasei Co., Ltd.) were used instead of the polymer particles having an average particle diameter of 5.2 um, and a triazine-based ultraviolet absorber ("Tinuvin (registered trademark) Tinuvin 326" manufactured by BASF, molecular weight: 316) was used. Using a bar coater, the obtained coating liquid was applied onto the surface of the heat-ray reflection layer polyester film and then dried to form a weather-resistant layer having a predetermined thickness shown in Table 1.

[Example 1-1]

The coating liquid A was applied to the heat-ray reflection layer A (thickness: 55 $\mu$m) using a bar coater. The resultant was placed and dried in an oven at 120°C for 1 minute to solidify the coating layer, thereby producing a laminated film. The thickness of the obtained laminated film was 69 $\mu$m (heat-ray reflection layer A: 55 um, surface functional layer: 14 um). The obtained laminated film was evaluated by the method shown above. The results are shown in Table 1.

[Examples 1-2 to 1-4 and Comparative Examples 1-1 to 1-2]

A laminated film was prepared in the same manner as in Example 1-1 except that each component of the coating liquid A was adjusted so as to have the value shown in Table 1, and the same evaluation as in Example 1-1 was performed.

[Examples 2-1 to 2-3 and Comparative Examples 2-1 to 2-2]

A laminated film was prepared in the same manner as in Example 1-1 except that each component of the coating liquid B was adjusted so as to have the value shown in Table 1, and the same evaluation as in Example 1-1 was performed.

[Examples 3-1 to 3-4 and Comparative Examples 3-1 to 3-3]

A laminated film was prepared in the same manner as in Example 1-1 except that each component of the coating liquid C was adjusted so as to have the value shown in Table 1, and the same evaluation as in Example 1-1 was performed.

[Comparative Example 4-1]

A laminated film was prepared in the same manner as in Example 1-1 except that no coated layer was applied so as to have the values shown in Table 1, and the evaluation was performed in the same manner as in Example 1-1.

[Comparative Example 4-2]

A laminated film was prepared in the same manner as in Example 1-1 except that each component of the coating liquid D was adjusted so as to have the value shown in Table 1, and the same evaluation as in Example 1-1 was performed.

[Comparative Example 4-3]

A laminated film was prepared in the same manner as in Example 1-1 except that each component of the coating liquid E was adjusted so as to have the value shown in Table 1, and the same evaluation as in Example 1-1 was performed.
The formulation and the results are shown in Table 1 below.

[Table 1]

| | | | Example 1-1 | Example 1-2 | Example 1-3 | Example 1-4 | Comparative Example 1-1 | Comparative Example 1-2 | Example 2-1 | Example 2-2 | Example 2-3 | Comparative Example 2-1 | Comparative Example 2-2 | Example 3-1 | Example 3-2 | Example 3-3 | Comparative Example 3-1 | Comparative Example 3-2 | Comparative Example 4-1 | Comparative Example 4-2 | Comparative Example 4-3 |
|---|---|---|---|---|---|---|---|---|---|---|---|---|---|---|---|---|---|---|---|---|---|
| Thickness structure | Heat-ray reflection layer | μm | 55 | 55 | 55 | 55 | 55 | 55 | 55 | 55 | 55 | 55 | 55 | 55 | 55 | 55 | 55 | 55 | 55 | 55 | 55 |
| | Coating layer (after drying) | μm | 5 | 5 | 5 | 5 | 5 | 5 | 5 | 5 | 5 | 5 | 5 | 5 | 5 | 5 | 5 | 5 | - | 5 | 10 |
| | Total | μm | 60 | 60 | 60 | 60 | 60 | 60 | 60 | 60 | 60 | 60 | 60 | 60 | 60 | 60 | 60 | 60 | 55 | 60 | 65 |
| Coating liquid | | | Coating liquid A | | | | | | Coating liquid B | | | | | Coating liquid C | | | | | - | D | E |
| Filler | Average particle diameter | μm | 5.2 | 5.2 | 5.2 | 5.2 | 5.2 | 5.2 | 7.3 | 7.3 | 7.3 | 7.3 | 7.3 | 4.0 | 4.0 | 4.0 | 4.0 | 4.0 | - | - | 12.1 |
| | Ratio (coated layer/ particle diameter) | - | 1.0 | 1.0 | 1.0 | 1.0 | 1.0 | 1.0 | 0.7 | 0.7 | 0.7 | 0.7 | 0.7 | 1.3 | 1.3 | 1.3 | 1.3 | 1.3 | - | - | 0.8 |
| of coating liquid | Resin (main agent) | Parts by mass | 100 | 100 | 100 | 100 | 100 | 100 | 100 | 100 | 100 | 100 | 100 | 100 | 100 | 100 | 100 | 100 | - | 100 | 100 |
| | Filler | Parts by mass | 0.4 | 0.7 | 0.9 | 1.4 | 0.2 | 2.0 | 0.9 | 0.9 | 1.4 | 0.2 | 2.0 | 0.9 | 0.9 | 1.4 | 0.2 | 2.0 | - | - | 1.5 |
| | Ultraviolet absorber | Parts by mass | 20 | 20 | 20 | 20 | 20 | 20 | 20 | 20 | 20 | 20 | 20 | 20 | 20 | 20 | 20 | 20 | - | - | 20 |

EP 4 424 509 A1

| Coating liquid | | | Coating liquid A | | | | | | Coating liquid B | | | | | Coating liquid C | | | | | - | D | E |
|---|---|---|---|---|---|---|---|---|---|---|---|---|---|---|---|---|---|---|---|---|---|
| Initial | Total light transmittance | % | 85 | 85 | 85 | 85 | 84 | 85 | 84 | 85 | 85 | 84 | 87 | 84 | 84 | 80 | 82 | 78 | 80 | 80 | 87 |
| | Transmittance (400 to 800 nm average value) | % | 82 | 82 | 83 | 82 | 82 | 82 | 82 | 82 | 82 | 82 | 82 | 82 | 82 | 82 | 82 | 82 | 83 | 83 | 82 |
| | Transmittance (900 to 1000 nm average value) | % | 4 | 3 | 3 | 3 | 3 | 3 | 3 | 3 | 3 | 3 | 3 | 3 | 3 | 3 | 3 | 3 | 3 | 3 | 3 |
| | Coefficient of static friction μs | - | 0.62 | 0.50 | 0.42 | 0.38 | 0.64 | 0.38 | 0.60 | 0.41 | 0.37 | 0.69 | 0.39 | 0.63 | 0.51 | 0.49 | 0.65 | 0.45 | 0.68 | 0.69 | 0.37 |
| After weather resistance test | b value | % | 2 | 2 | 2 | 2 | 2 | 2 | 2 | 2 | 2 | 2 | 2 | 2 | 2 | 2 | 15 | 2 | 36 | 31 | 1.5 |
| After durability test | Total light transmittance | % | 84 | 84 | 84 | 84 | 84 | 84 | 84 | 84 | 84 | 83 | 86 | 84 | 84 | 80 | 83 | 78 | 83 | 83 | 82 |
| | Adhesion | | ⊙ | ⊙ | ⊙ | ○ | ⊙ | × | ⊙ | ⊙ | ○ | ⊙ | × | ⊙ | ⊙ | ○ | ○ | × | ⊙ | × | × |

EP 4 424 509 A1

17

As can be seen from Table 1, it has been found that the laminated film of Examples of the present invention is excellent in durability and adhesion and can maintain high light transmittance, as compared with the laminated film of Comparative Examples.

## Claims

1. A laminated film comprising a heat-ray reflection layer and a surface functional layer on at least one surface of the heat-ray reflection layer, wherein the surface functional layer is formed of a resin composition containing particles and a resin, the particles have an average particle diameter of 4 $\mu$m to 10 $\mu$m, and the particles are contained in an amount of 0.3 parts by mass to 1.5 parts by mass with respect to 100 parts by mass of the resin.

2. The laminated film according to claim 1, wherein the particles are organic particles.

3. The laminated film according to claim 1 or 2, wherein the heat-ray reflection layer contains a multilayer laminated film in which 20 or more layers of at least two resin layers having different refractive indices are alternately laminated in the thickness direction.

4. The laminated film according to any one of claims 1 to 3, wherein the resin composition contains an ultraviolet absorber having a triazine skeleton.

5. The laminated film according to any one of claims 1 to 4, wherein the resin contained in the resin composition includes a resin as a binder component.

6. The laminated film according to claim 5, wherein the resin as a binder component includes an acrylic resin.

7. The laminated film according to any one of claims 1 to 6, wherein the laminated film has an average transmittance of 70% or more at a wavelength of 400 nm to 800 nm and an average transmittance of 20% or less at a wavelength of 900 nm to 1000 nm.

8. A film for protected horticulture comprising the laminated film according to any one of claims 1 to 7.

9. A woven or knitted fabric comprising a thin belt-shaped tape cut from the laminated film according to any one of claims 1 to 7.

FIG. 1

FIG. 2

## INTERNATIONAL SEARCH REPORT

International application No.

**PCT/JP2022/032500**

**A. CLASSIFICATION OF SUBJECT MATTER**

*B32B 27/18*(2006.01)i; *A01G 9/14*(2006.01)i; *A01G 13/02*(2006.01)i; *B32B 27/36*(2006.01)i; *C08K 5/3492*(2006.01)i; *C08L 33/00*(2006.01)i; *D03D 15/46*(2021.01)i; *D03D 15/52*(2021.01)i; *D04B 1/14*(2006.01)i

FI: B32B27/18 Z; B32B27/18 A; A01G9/14 S; A01G13/02 E; C08L33/00; C08K5/3492; B32B27/36; D03D15/52; D03D15/46; D04B1/14

According to International Patent Classification (IPC) or to both national classification and IPC

**B. FIELDS SEARCHED**

Minimum documentation searched (classification system followed by classification symbols)

B32B27/18; A01G9/14; A01G13/02; B32B27/36; C08K5/3492; C08L33/00; D03D15/46; D03D15/52; D04B1/14

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2020-179643 A (TOYOBO FILM SOLUTIONS LTD) 05 November 2020 (2020-11-05) claims, paragraphs [0025]-[0028], [0052], examples | 1-3, 5-9 |
| Y | | 4-9 |
| Y | JP 2017-153377 A (TEIJIN FILM SOLUTIONS LTD) 07 September 2017 (2017-09-07) claims, paragraph [0056] | 4-9 |
| Y | JP 2021-27802 A (ADEKA CORP) 25 February 2021 (2021-02-25) claims, paragraph [0035] | 4-9 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 October 2022** | **01 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/032500**

| Patent document cited in search report | | | Publication date (day/month/year) | Patent family member(s) | | | Publication date (day/month/year) |
|---|---|---|---|---|---|---|---|
| JP | 2020-179643 | A | 05 November 2020 | (Family: none) | | | |
| JP | 2017-153377 | A | 07 September 2017 | US | 2021/0195851 | A1 | |
| | | | | claims, paragraph [0111] | | | |
| JP | 2021-27802 | A | 25 February 2021 | EP | 3835061 | A1 | |
| | | | | claims, paragraph [0062] | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5464567 B
- JP 2012206430 A
- JP 6780636 B
- JP 5513373 B
- JP 2020179643 A